(19) Europäisches Patentamt
European Patent Office
Office européen des brevets

(11) Publication number: **0 289 632 A1**

(12) # EUROPEAN PATENT APPLICATION

(21) Application number: 87106432.5

(22) Date of filing: 04.05.87

(51) Int. Cl.⁴: C08L 63/00, C08G 59/40, C08J 3/24, C09J 3/16

(43) Date of publication of application: 09.11.88 Bulletin 88/45

(84) Designated Contracting States: AT BE CH DE ES FR GB GR IT LI NL SE

(71) Applicant: AMERICAN CYANAMID COMPANY
1937 West Main Street P.O. Box 60
Stamford Connecticut 06904-0060(US)

(72) Inventor: Eagle, Glenn Gilbert
973k Redfield Road
Bel Air Maryland 21014(US)

(74) Representative: Wächtershäuser, Günter, Dr.
Tal 29
D-8000 München 2(DE)

(54) **High green strength induction curable adhesives.**

(57) A new and improved one part, induction curable epoxy ahesive composition exhibiting storage stability at temperatures 105°F of at least about two weeks, induction curable at temperatures of less than about 185°C in 6 seconds or less to a green strength of at least 200 psi, and exhibiting excellent full-cured physical and environmental properties is disclosed. The adhesive compositions are rendered induction curable by a combination curing agent comprising:

(i) a latent high temperature curing agent, such as dicyandiamide;

(ii) a latent intermediate temperature curing agent, such as HY940 or ANCAMINE® 2041A; and

(iii) a green strength enhancing agent comprising a finely divided thermoplastic resin powder selected from the group consisting of low density polyethylene, ethylene vinyl acetate, polystyrene, polyvinyl formal, polyvinyl butyral, poly(methyl methacrylate), NYLON-12, hot melt polyester resins and mixtures of any of the foregoing resins. The compositions are especially suited for fixturing oily galvanized metal parts in accordance with contemporary automobile manufacturing methods.

EP 0 289 632 A1

# HIGH GREEN STRENGTH INDUCTION CURABLE ADHESIVES

## Background of the Invention

The present invention relates to storage stable, one-part, epoxy adhesives that cure rapidly at elevated temperatures. More particularly, the invention relates to induction curable adhesives which develop minimum intermediate-cure or green strengths of 200 psi in six seconds or less upon induction heating to temperatures of 185° or less.

One part epoxy adhesive compositions containing at least one latent curing agent, alone or in combination with a co-curing agent or cure accelerator, and containing other modifiers and/or fillers are known.

U.S. 2,915,490; U.S. 2,986,546; and U.S. 3,098,054 disclose the combination of epoxy, polyvinyl formal and fillers in adhesive compositions.

U.S. 3,635,875 discloses an adhesive composition containing epoxy resins derived from bisphenol-A, polyglycol diepoxide, dicyandiamide, silica and glycidoxypropyltrimethoxysilane.

U.S. 3,639,657 discloses the reaction product of phthalic anhydride and diethylenetriamine. U.S. 3,488,742 describes hardenable compositions comprising: a 1,2-epoxy compound having a 1,2-epoxy equivalency greater than 1; a curing agent comprising dicyandiamide and as a curing accelerator, the condensation product obtained by reacting equimolar proportions of phthalic anhydride and diethylenetriamine.

Of particular interest are the disclosures of U.S. 4,243,706 and U.S. 4,459,398. In U.S. 4,243,706 a one part adhesive composition useful in the automobile manufacturing for bonding metal substrates is described. This adhesive contains a minor proportion of epoxy resin; a plasticizer such as alkyl benzyl phthalate; a latent curing agent comprising Ciba-Geigy's HY940®; and a major proportion of carboxy-functional polyvinyl chloride polymer.

In U.S. 4,459,398, another adhesive for use in bonding metal and polymeric parts in automobile manufacturing is disclosed. This adhesive comprises an epoxy component and a triple curing agent combination comprising: dicyandiamide; a complex of an imidazole with a nickel or copper metal salt; and a latent curing agent complex that liberates diethylenetriamine at elevated cure temperatures, i.e. HY940®.

Current automotive designs incorporate both steel and molded polymeric component parts. In the case of metal to metal parts, for example, oily metal hemflanges must be bonded to automotive doors, hoods and deck lids. Welding has been the traditional method for providing fixture strength to these parts. Currently, however, there is a need to use galvanized metal parts and components. Although galvanized metal can be welded, it is susceptible to the formation of weld marks. Moreover, during welding, the galvanic coating is burned off, leaving sites for corrosion to start.

These shortcomings have caused automobile manufacturers to consider alternative bonding methods and primarily one component heat curable epoxy adhesives are currently being considered for this purpose. The criteria which an epoxy adhesive must meet to satisfy automobile manufacturers needs are highly specialized.

A conventional one part epoxy adhesive containing a latent curing agent reactive only at elevated temperatures is unsatisfactory because prior to curing, the uncured adhesive acts as a lubricant, permitting slippage and misalignment of parts during shipment from the stamping plant to the assembly plant. In addition, after assembly, the bonded parts and more particularly the adhesive must be able to withstand the extremely high temperatures of the paint ovens, usually at least about 180°C and higher when final paint coats are applied, without losing post-cure physical properties.

Current requirements dictate that the adhesive composition must be capable of developing an intermediate cure strength sufficient to provide a fixture strength comparable to prior art welding methods. This intermediate cure strength is referred to herein as green strength. The bonded parts must survive trans-shipment and handling in a useable condition. The adhesive must also develop final cure properties, including physical and environmental properties and be able to withstand the temperatures and conditions of subsequent processing, e.g. the paint ovens.

Induction heating of these parts is of considerable interest to automobile manufacturers. In induction curing methods, low frequency electromagnetic radiation is used to provide very fast localized heating in the metal parts as a means for partially curing the adhesive. Energy requirements for induction heating are fairly low compared to other methods of heating. Moreover, the speed with which heating is accomplished,

e.g. 2 seconds or less to reach 200°C metal temperature, makes the concept particularly desirable in automotive stamping plant processes which are required to produce about 300 parts per hour.

Induction curing processes raise special problems for epoxy adhesives. It is known, for example, from oven cured systems, that porosity in the bond line has an adverse effect on environmental properties. Induction heating causes bondline porosity to develop in reponse to the rapid applications of heat. Moisture, volatiles, trapped air and exotherm in the adhesive can all cause porosity in the bondline. An induction curable adhesive should not be overly sensitive to these problems.

Furthermore, the localized heating of metal parts by induction is not as precise as may be desired. Induction heating reponses can vary and the process may be greatly affected by such variables as coil distance from the part, metal thickness, heating time and the configuration of the part. Therefore, an induction curable adhesive should develop acceptable green strength over a broad temperature range of at least about ±25°F, to accommodate variations inherent in an induction heating process, and the broader the cure range the better.

Accordingly, it is an object of the present invention to provide an induction curable one-part epoxy adhesive composition which develops high green strength for use in modern automobile manufacturing processes.

It is another object of the present invention to provide an induction curable epoxy adhesive composition capable of bonding oily galvanized metal parts together and provide structural strength.

It is a further object of the present invention to provide and induction curable epoxy adhesive composition capable of developing a minimum green strength of 200 psi in six seconds or less by induction heating to 185°C or less.

It is still another object of the present invention to provide a high green strength induction-curable epoxy adhesive which is storage stable and remains pumpable after aging for a period of at least about two weeks at 41°C.

## Summary of the Invention

In accordance with these and other objects, the present invention provides a new and improved curable epoxy adhesive composition, said composition comprising:

(a) an epoxy prepolymer or mixture or prepolymers and

(b) an effective amount of a combination curing agent comprising:

(i) a latent high temperature curing agent;

(ii) a latent intermediate temperature curing agent; and

(iii) a green strength enhancing agent com prising a finely divided thermoplastic resin powder selected from the group consisting of low density polyethylene, ethylene vinyl acetate copolymer, polystyrene, polyvinyl formal, polyvinyl butyral poly(methyl methacrylate), Nylon-12 and hot metl polyester resins and mixtures of the foregoing resins.

In preferred embodiments, the epoxy resin component (a) comprises:

(i) a polyfunctional aromatic epoxy resin;

(ii) a polyfunctional aliphatic epoxy resin; and

(iii) glycidoxypropyltrimethoxysilane

The latent high temperature curing agent comprises a latent epoxide curing agent which remains relatively inert up to temperatures of about 300°F but at temperatures above about 300°F is capable of rapidly catalyzing the crosslinking of the epoxy component. Illustrative latent high temperature curing agents may include dicyandiamide and diaminodiphenyl sulfone, for example. The preferred latent high temperature curing agent for use herein as component (b)(i) is dicyandiamide (DICY).

The latent intermediate temperature curing agents for use as component (b) (ii) herein are generally unreactive up to temperatures of between about 100° and 150°C and are present in an amount effective to partially cure the adhesive in combination with component (b)(iii) to provide a green strength of at least about 200 psi in six seconds or less upon induction heating to temperatures of about 185°C or less. Illustrative latent intermediate temperature curing agents include HY939®, HY940® available from Ciba-Geigy and ANCAMINE® 2014A a modified polyamine available from Anchor Chemical Corporation.

The thermoplastic powders for use as green strength enhancing agent (b)(iii) will generally have a particle size of between about 5 to about 500 microns and exhibit a glass transition temperature or crystalline melt temperature in the range of between about 50°C to about 160°C. It is important to note that only the thermoplastic powders recited, enhanced green strength properties out of several polymers

evaluated. The green strength enhancing agent must contibute to handling strength upon induction heating.

In preferred embodiments, a new and improved combination curing agent additive for epoxy resins is provided, said additive comprising components (b)(i) to (b)(ii) in the following proportions: from about 7 to about 12% by weight (b)(i); from about 35 to about 65% by weight of (b0(ii); and from about 26 to abut 53% by weight of (b)(iii), based upon the total weight of said additive.

The new and improved induction curable adhesives of the present invention generally comprise about 100 parts of epoxy resin component (a) and from about 30 to about 50 parts by weight of combination curing agent component (b), based on the total weight of the adhesive compositions, wherein in component (b), component (b)(i) is present in an amount of from about 2 to about 8 phr; component (b)(ii) is present in an amount of from about 12 to about 30 phr; and component (b)(iii) is present in an amount of from about 12 to about 28 phr. In especially preferred embodiments, induction curable adhesives for bonding oily metal substrates are provided which additionally comprise as component (c) on metal adhesion promoter comprising a finely-divided mineral filler selected from the group consisting of talc, calcium carbonate, fumed silica and mixtures of any of the foregoing fillers. In accordance with these embodiments, the adhesive compositions for oil metal substrates comprise 100 parts by weight of epoxy component (a), from about 30 to about 50 parts by weight of combination curing agent (b) and from about 27 to about 100 parts by weight of metal adhesion promoter component (c), based on the total weight of the composition. The compositions of this invention may also comprise other additives conventional for epoxy adhesives and pastes, such as fillers, thixotropic agents, dyes, pigments and the like.

The new and improved induction curable adhesive compositions of the present invention are characterized by a storage stability of at least about 2 weeks at 41°C (105°F) without premature crosslinking or loss in pumpability. The compositions are induction curable to provide green strength bonding or metal parts of at least about 200 psi in six seconds or less upon induction heating to 185°C or less. The new and improved adhesives in final cured state exhibit good physical properties and good environmental properties such as for example high impact strength, good high temperature/humidity resistance, good salt spray resistance and good scab corrosion resistance. In accordance with the present invention, a satisfactory one-part, induction curable epoxy adhesive for bonding oily galvanized metal parts during automobile assembly procedures is provided.

Other objects and advantages of the present invention will become apparent from the following detailed description and illustrative working Examples.

## Detailed Description of the Invention

In general, the induction-curable adhesive compositions of the present invention are prepared by mixing the epoxide prepolymers or mixtures of prepolymers (a) with the unique induction curing agent combination, components (b)(i)-(b)(iii) above in carefully specified amounts, to provide induction curable epoxy adhesives exhibiting excellent storage stability, improved green strength adhesion and toughness and excellent environmental and final cure properties.

The epoxy resins suitable for use in component (a) in the present invention are compounds having more than one epoxide group per molecule available for reaction with the combination curing agents of the present invention. Such epoxy prepolymers include but are not limited to polyglycidyl ethers of polyvalent phenols, for example pyrocatechol; resorcinol, hydroquinone; 4,4'-dihydroxydiphenyl methane; 4,4'-dihydroxy-3,3'-dimethyldiphenyl methane; 4,4'-dihydroxydiphenyl dimethyl methane; 4,4'-dihydroxydiphenyl methyl methane; 4,4'-dihydroxydiphenyl cyclohexane; 4,4'-dihydroxy-3,3'-dimethyldiphenyl propane; 4,4'-dihydroxydiphenyl sulfone; or tris-(4-hydroxyphenyl)methane; polyglycidyl ethers of the chlorination and bromination products of the above-mentioned diphenols; polyglycidyl ethers of novolacs (i.e., reaction products of monohydric or polyhydric phenols with aldehydes, formaldehyde in particular, in the presence of acid catalysts); polyglycidyl ethers of diphenols obtained by esterifying 2 mols of the sodium salt of an aromatic hydrocarboxylic acid with 1 mol of a dihaloalkane or dihalogen dialkyl ether (U.K. 1,017,612); and polyglycidyl ethers of polyphenols obtained by condensing phenols and long-chain halogen paraffins containing at least two halogen atoms (U.K. 1,024,288).

Other suitable compounds include polyepoxy compounds based on aromatic amines and epichlorohydrin, for example N,N'-diglycidyl-aniline; N,N'-dimethyl-N,N'-diglycidyl-4,4'-diaminodiphenyl methane; N,N,N',N'-tetra glycidyl-4,4'-diaminodiphenyl methane; and N-diglycidyl-4-aminophenyl glycidyl ether. Special mention is made of N,N,N',N'-tetraglycidyl-1,3-propylene-bis(4-aminobenzoate).

Glycidyl esters and/or epoxycyclohexyl esters of aromatic, aliphatic and cycloaliphatic polycarboxylic

acids, for example phthalic acid diglycidyl esters and adipic diglycidyl ester and glycidyl esters of reaction products of 1 mol. of an aromatic or cycloaliphatic dicarboxylic acid anhydride and 1/2 mole of a diol or 1/n mol of a polyol with n hydroxyl groups, of hexahydrophthalic acid diglycidyl esters, optionally substituted by methyl groups, are also suitable.

Glycidyl ethers of polyhydric alcohols, for example of 1,4-butanediol; 1,4-butenediol; glycerol; 1,1,1-trimethylol propane; pentaerythritol and polyethylene glycols may also be used. Triglycidyl isocyanurate; and polyglycidyl thioethers of polyvalent thiols, for example of bis-mercaptomethylbenzene; and diglycidyltrimethylene sulfone, are also suitable.

Preferably the epoxy prepolymer component will be selected from compounds having the idealized formula:

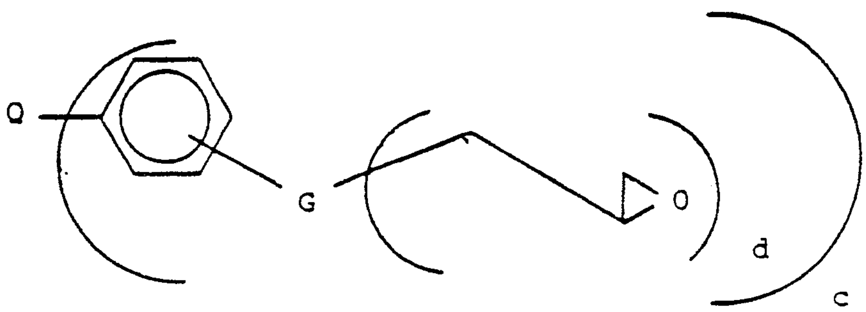

and halogen and alkyl substituted derivatives of such compounds, wherein c is 2, 3 or 4 and equal to the valence of Q; Q is a divalent, trivalent or tetravalent radical; G is -O-NR′ or –N-;R′ is hydrogen or alkyl; and d is 1 or 2 depending on the valence of G.

Useful epoxy compounds will include the following:

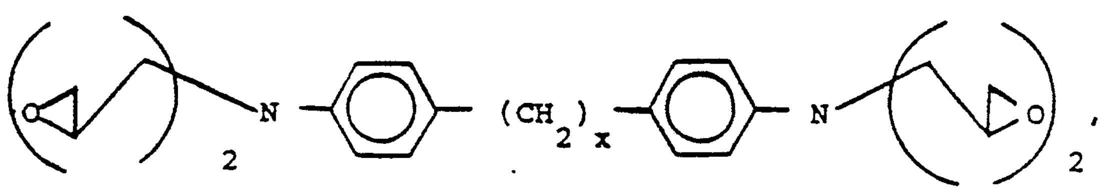

wherein x is an integer from 1 to 4, available commercially (where x = 1) as ARALDITE® MY-720 (Ciba-Geigy);

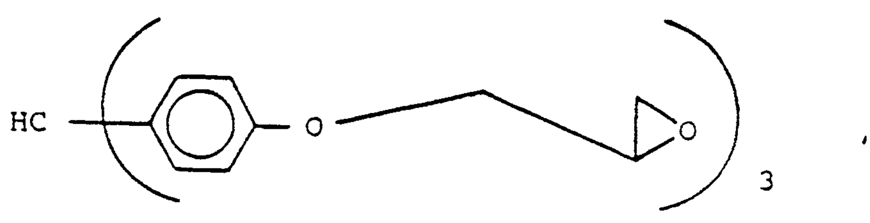

available commercially as XD 7342 (Dow Chemical).

Preferred epoxy compounds are of the formula

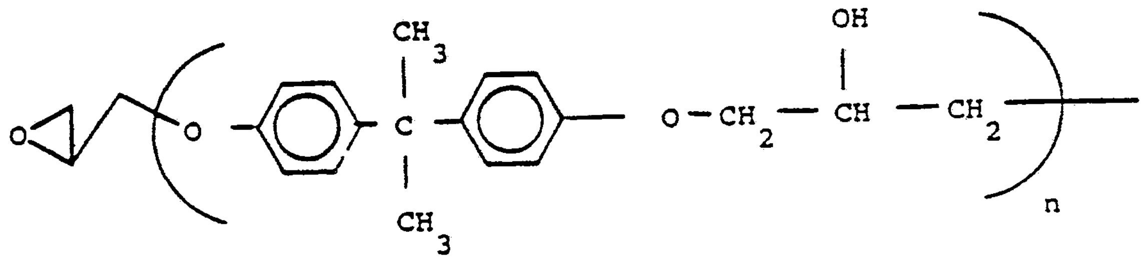

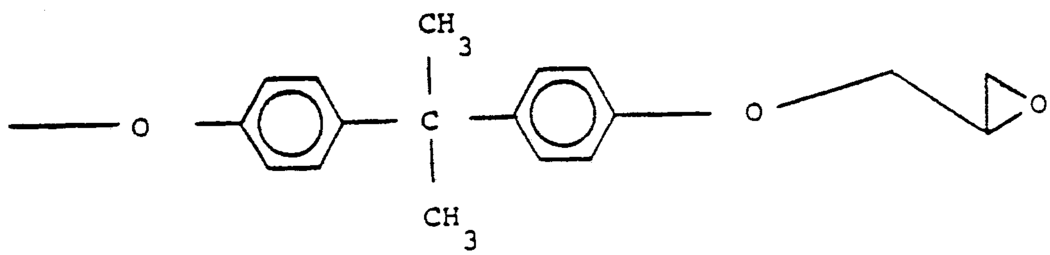

wherein n is a whole number of from about 1 to about 10. Such compounds are available commercially as DER 331 (Dow Chemical), average molecular weight 350-400, or EPON® 828 (Shell).

Also useful are compounds of the formula

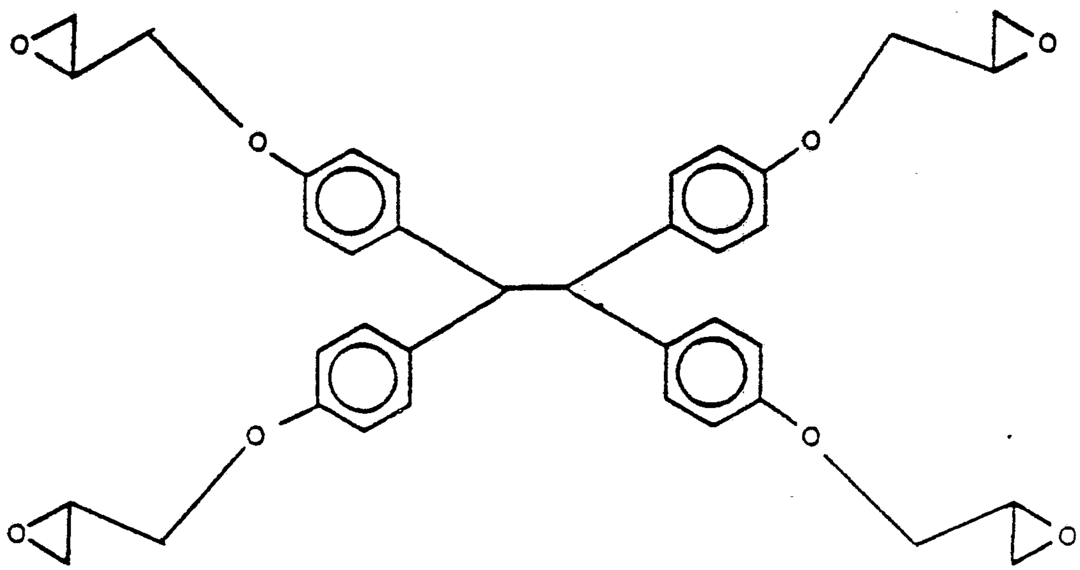,

available commercially as EPON® 1031 (Shell): and compounds of the formula

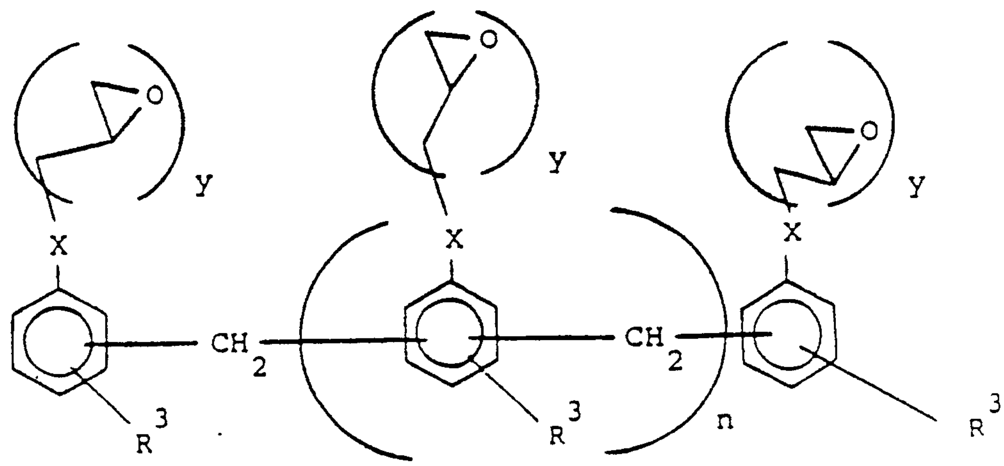

wherein Y is 1 or 2, X is -O-or -NH, $R^3$ is H or $CH_3$ and n is 2 to 8.

Compounds in which X is -O-are available as a mixture under the tradename DEN-438 from Dow Chemical Company.

Useful in addition are triglycidyl ethers of metaand para-hydroxyaniline, e.g., represented by the formula:

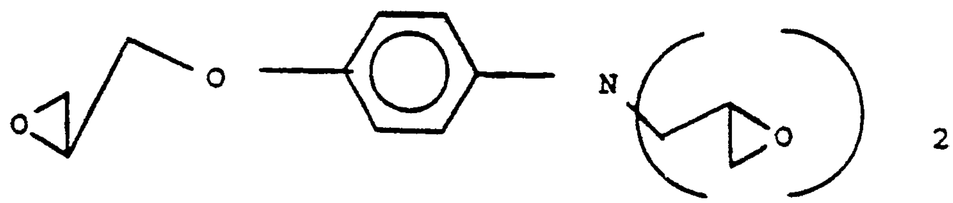

These are available under the tradename ARALDITE® 0500, 0510 from Ciba-Geigy.

In especially preferred embodiments component (a) comprises a mixture of epoxy prepolymers comprising:

(i) diglycidyl ether of bisphenol-A (DGEBA):

(ii) neopentylglycol diglycidyl ether; and

(iii) glycidoxypropyltrimethoxy silane

In accordance with these preferred embodiments, the DGEBA resin component (a)(i) is present in an amount of from about 33% to about 43% by weight, the neopentylglycol diglycidyl ether component (a)(ii) is present in an amount of from about 3 to about 7% by weight and the glycidoxypropyltrimethoxysilane component (a)(iii) is present in an amount of from about 1 to about 6% by weight, based on 100% by weight of the overall adhesive composition.

In accordance with the present invention, new and improved induction curable adhesive compositions, stable for a period of two weeks at temperatures of about 41°C, capable of achieving minimum green strength of 200 psi in six seconds or less by induction heating to 185° or less, are provided by incorporation of an effective amount of a unique multicomponent curing agent combination comprising:

(b) (i) a latent high temperature curing agent;

(ii) a latent intermediate temperature curing agent; and

(iii) a green strength enhancing agent, in carefully specified relative proportions, set forth above.

The new and improved adhesives of the present invention are especially adapted for modern automobile fabrication and manufacturing by virtue of their unique combination curing agent system. The stable latent high temperature curing agent provides high crosslinking of the epoxy components for full cure during the paint bake oven cycles. The stable latent intermediate temperature curing agent reacts very quickly with a portion of the epoxide components during the very short induction heating portion of the cure cycle, giving sufficient handling strength for fixturing purposes. The green strength enhancing agent comprises a member of certain thermoplastic powders dispersed in the adhesive paste as an enhancing agent to melt or fuse within the adhesive during the induction heating cycle to provide additional green strength to the induction cured or partially cured adhesive.

In greater detail, the latent high temperature curing agents for use as component (b)(ii) of the induction

curing agent combination of this invention comprise any latent high temperature curing agent for epoxy resins which becomes effective crosslinking agents at temperatures of above about 300°F, but which are stable and inert to epoxide groups at temperatures of 300°F or less. The preferred latent high temperature curing agent for use as component (b)(i) herein is dicyandiamide (DICY). Dicyandiamide is employed to provide full cured properties by catalyzing crosslinking in the high temperature paint bake ovens. DICY is the preferred latent high temperature curing agent because it is inexpensive, exhibits excellent latency at temperatures below 300°F and exceptional catalytic activity at higher temperatures to provide excellent final cure properties. DICY is abundantly commercially available. Other known latent high temperature curing agents such as diaminodiphenylsulfone or DICY analogs might also be used in component (b)(i).

The latent high temperature curing agent remains essentially unreacted during the induction heat cycle. Accelerators commonly employed with DICY as co-catalysts are not generally necessary for the high temperature curing of the paint bake ovens. Accelerators may be added together with the DICY, if oven cure temperatures are expected to be les than 300°F. Careful selection of a high temperature curing agent accelerator must be made because, addition of accelerators to lower cure temperature for the DICY may also disadvantageously shorten shelf life stability of the adhesive. One particular curing accelerator for the DICY component which has unexpectedly been discovered not to adversely affect stability of the adhesive compositions is CA301® available from American Cyanamid Company. CA301® is the reaction product of 1,4-phenylenediisocyanate and dimethylamine having the formula:

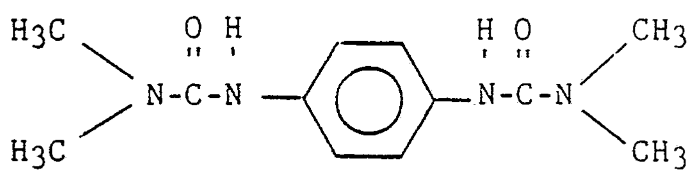 .

CA301 provides good final oven cured properties at 275°F or less, without shortening shelf life. Moreover, the handling strength after the induction heating cycles is not adversely affected by the addition of CA301 with the latent high temperature curing agent component (b)(i). For compositions which are to be final cured in paint bake ovens or the like at temperatures below about 300°F, a minor effective amount of CA301 or accelerator may be used, e.g., in an amount of from about 0.01% to about 3.0% by weight of the overall adhesive composition.

The latent intermediate temperature curing agents for use herein as component (b)(ii) comprises latent curing agents which are unreactive at temperatures of about 100°C or less, but which effectively cure epoxide prepolymers at temperatures of between about 100°C and 175°C. Suitable intermediate temperature curing agents include the reaction product of diethylene triamine and phthalic anhydride sold under the trade names HY940 and HY939 by Ciba-Geigy and a modified polyamine sold under the tradename ANCAMINE 2014® by Anchor Chemical Corporation.

HY940® has an idealized structure as follows:

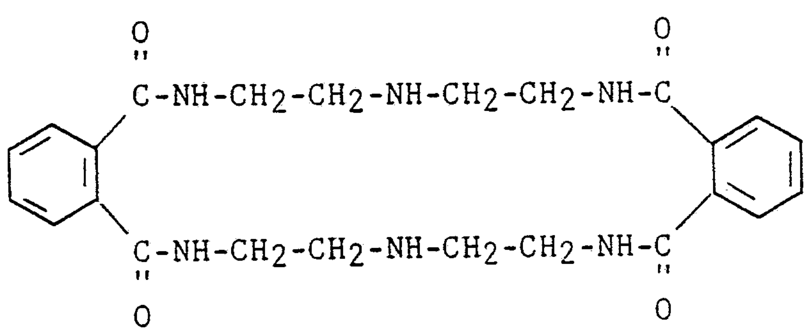

The latent intermediate temperature curing agent component (b)(ii) is used in an amount which is less than a stoichiometric amount necessary for full cure. The rapid reaction times of these curing agents are generally better than can be achieved with DICY. Stability of the adhesive is an important consideration for the automobile manufacturers. Earlier efforts at achieving a high green strength adhesive employing DICY combined with accelerator to lower activation temperatures generally have provided relatively unstable compositions. The intermediate temperature curing agents for use herein exhibit excellent stability and

provide the new and improved combination curing agent of this invention with the necessary crosslinking upon induction heating to provide sufficient green strength for fixturing of parts for shipment, storage, assembly and coating/finishing operations prior to final curing. The high cost and ultimately poor final-cure properties obtained with using the intermediate temperature curing agents as the sole curative in the compositions indicates the need for a combination of both intermediate temperature and high temperature curing agents as taught herein.

The combination curing agent of the present invention also includes, as component (b)(iii), a green strength enhancing agent comprising a finely divided thermoplastic powder selected from the group consisting of low density polyethylene, ethylene vinyl acetate copolymer, polystyrene polyvinyl formal, polyvinyl butyral, poly(methyl methacrylate), Nylon-12 and hot melt polyester resins and mixtures of these reins.

The green strength enhancing agent must provide toughness in the partially cured adhesive. HY940, if used alone as the curing agent, yields a very brittle partially cured adhesive. Generally, the overall adhesive composition, does not require the addition of the thermoplastic green strength enhancing agent to enhance its fully cured properties. A careful selection of enhancing agent, however, may increase toughness and adhesion of the fully cured adhesive to oily galvanized substrates.

The green strength enhancing agent contributes to the handling strength of the adhesive after induction heating. The reasons for this and for the fact that only some of the thermoplastic powders tested improved green strength is uncertain at this time. The enhancing agents which do work are observed to increase the viscosity of the adhesive paste through the melting and/or fusing of polymer particles. In the case of one enhancing agent, for example, FORMVAR 15/95E®, a polyvinyl formal resin available from Monsanto Company, the thermoplastic green strength enhancing agent contributed approximately 25 psi of bonding strength to an induction heated partially-cured adhesive sample which did not contain the intermediate temperature curing agent HY940.

Of the thermoplastic powders tested which provided a green strength enhancing effect, all exhibited a glass transition temperature between about 50° and 160°C, and more particularly between about 65° and 130°C. However, this property is not determinative because a number of thermoplastic powders evaluated which exhibited a glass transition temperature within this range did not enhance the green strength of an inductive cured adhesive formulation.

The green strength enhancing agent is a thermoplastic powder in a finely divided form and generally a particle size of between about 5 to about 500 microns is satisfactory. Many of the polymers identified as green strength enhancing agents are commercially available in finely divided form or they may be size reduced by conventional methods, such as cryogenic grinding but care should be taken in the size reduction method employed not to degrade the polymers.

The green strength enhancing agents for use as component (b)(iii) herein are generally commercially available materials.

Illustrative low density polyethylene polymers for use herein as component (b)(iii) include MICROTHENE FN510® from USI. MICROTHENE FN510 polymers have a melt index of about 5 g/10 min.; a density of 0.924 g/cc; a spherical particle shape of an average particle size of less than about 20 microns; and a Vicat softening point of about 98°C. An ethylene vinyl acetate polymer sold under the trade designation MICROTHENE FE 532 also from USI may also be used. MICROTHENE FE532 has a melt index of 9 g/10 min; a density of 0.928 g/cc; a spherical shape of average particle size of less than 20 microns; and a Vicat softening point of about 75°C. A suitable polystyrene polymer is HOSTYREN® 57 available from American Hoechst Corporation. HOSTYREN® 57 has a melt flow rate of 2 g/10 min; gravity of 1.05; and a Vicat softening point of 107°C. A suitable poly(methyl methacrylate) polymer is ELVACITE® 2021 from Rohm and Haas Company. ELVACITE® 2021 is a high molecular weight resin having a density of 1196 kg/m$^3$; a specific gravity of 1.20 and a glass transition temperature of 98°C. A suitable polyvinyl formal resin is FORMVAR® 15/95E, available from Monsanto Company. FORMVAR® 15/95E has an average molecular weight of between about 24,000-40,000; a flow temperature at 1000 psi of 160-170°C; and an apparent glass transition temperature of about 103-113°C. A suitable polyvinyl butyral resin is BUTVAR® B-7B Resin also available from Monsanto. BUTVAR® B-7B resins have an average molecular weight of between about 50,000-80,000; a flow temperature at 1000 psi of 125-130°C; and an apparent glass transition temperature of 62-68°C. A suitable hot meltpolyester resin is VESTAMELT® X4053, available from HUELS Corporation. VESTAMELT® X4053 has a melt flow index of about 10.0 g/10 min., a melt viscosity at 140°C or 950 Pas; and a capillary method melting point of about 123°C. Other suitable thermoplastic powders are illustrated in the Examples which follow.

The new and improved induction curable adhesive compositions of this invention may also contain other additives such as fillers, pigments and dyes or the like added to make a paste of desired properties.

Suitable fillers for use in the compositions of this invention are mineral fillers. Illustrative examples include: talc, mica, titanium dioxide, lithopone, zinc oxide, zirconium, silica, silica aerogel, iron dioxide, diatomaceous earth, calcium carbonate, fumed silica, silazane treated silica, precipitated silica, glass fibers, magnesium oxide, chromic oxide, zirconium oxide, aluminium oxide, crushed quartz, calcined clay, asbestos, carbon, graphite, cork, cotton, synthetic fibers, to name but a few. Preferred fillers for use herein include: talc, hydrophobic fumed silica such as CABO-SIL® N707SD from Cabot Corporation and titanium dioxide. Generally, the other additives such as fillers, dyes, pigments, thioxotropic agents and the like will be added in conventional amounts.

Other objects and advantages of the present invention will become apparent from the following working Examples:

## Detailed Description of the Preferred Embodiments

In the following Examples a number of adhesive compositions were prepared and tested for shelf stability at 105°F; induction cure response and green strength; and final cure physical and environmental properties.

The adhesive compositions were each prepared by adding the components to a Ross Mixer, liquids then powders, and the compositions were blended under a vacuum for a time sufficient to insure thorough mixing and de-aeration of the compositions. The test formulations were stored in closed containers at temperatures of less than 120°F until use. Care should be taken to ensure that the compositions are de-aerated and stored in air-tight containers because several of the components are hygroscopic. The presence of additional or excess moisture in the compositions is undesirable because it may cause foaming of the compositions during cure which may adversely effect intermediate and final cured properties.

The compositions were prepared from commercially available products, identified as follows:

| Tradename | Description | Commercial Source |
|---|---|---|
| DER 331® | Diglycidyl Ether of Bisphenol-A | Dow Chemical |
| DER 736® | a polyglycol diepoxide | Dow Chemical |
| Kelpoxy 293-100® | rubber-modified epoxy | Spencer-Kellogg |
| WC-68 | Neopentyl glycol diglycidyl ether | Wilmington Chemical |
| Z-6040® | glycidoxypropyl-trimethoxy silane | Dow Corning |
| CA 150® | 1,1'-(4-methyl-m--phenylene)bis (3,3-dimethylurea) | American Cyanamid |
| CA 152® | 1,1-(methylene di-phenyl)bis(4,4-di-methyl urea) | American Cyanamid |
| HY940® | 100 pbw Araldite® 6010 epoxy and 70 pbw HT939 | Ciba-Geigy |
| Formvar® 15/95E | polyvinyl formal resin | Monsanto |
| Acryloid® K120N | acrylate/methyl methacrylate resin | Rohm & Haas |

The adhesive formulations were tested for shelf stability by placing 200g portions of the compositions in one-pint sealed containers and placing them in an oven at 105°F. Visual inspections of the compositions for the a clear increase in viscosity were conducted regularly over a three week period. Time until a marked viscosity increase was noted.

The compositions were tested for induction cure response and green strength properties by first preparing test coupons.

The test coupons were cut from one side-galvanized cold rolled steel measuring 0.03 inch thick and mill oil coated, into 1 inch by 4 inch strips. The strips were conditioned for 24 hours at 23±2°C and 50% ±5% relative humidity. The adhesive was applied to the galvanized surface and a 1 inch overlap lap joint was prepared between test strips having a bondline thickness of between a minimum of .005 inch and a maximum of 0.01 inch. 5 mil glass beads were added to the adhesive compositions to insure minimum bondline thickness. Excess adhesive squeeze-out was removed after the coupons has been assembled, prior to clamping on the induction curing apparatus.

For some of the samples, test panels measuring 4 inches by 12 inches of cold rolled 3 mil, mill oil treated, galvanized steel and adhesive were assembled into lap joints with a 0.5 inch overlap and cured as indicated. Thereafter, test strips measuring 1 inch by 6 inches are cut from the panel and tested for lap shear pull strength as described below. The green strengths for these test strips are reported in lbs, whereas test coupon results are reported in psi below.

The test coupons and test panels were induction cured on low frequency 10KHz Robotron equipment equipped with over and under coils. Temperature measurements were conducted with an IRCON infra-red pyrometer with a capability of 23-300°C temperature range and ± 3°C accuracy. The mounted test coupons were subjected to induction heating using a 4 second heating cycle and induction heating to a metal

temperature of between 176°C and 185°C.

Some of the induction heated test coupons were conditioned to 23° ± 2°C and lap shear pull tests were performed on standard Instron equipment at a shear pull test rate of 13 mm per minute. The tensile shear pull strength of the induction cured samples, referred to herein as green strength was noted, recording the peak load and type of separation, i.e. "adhesive failure" wherein adhesive separated from substrate, or "cohesive failure" wherein there was a separation within the adhesives.

Some of the test coupons were fully cured by heating in a forced air oven at 400°F for 30 minutes. Shear pull strength of the fully cured adhesive was determined on Instron equipment as outlined above.

The compositions prepared and tested and the results obtained are set forth in Table 1 as follows:

TABLE 1: INDUCTION CURABLE ADHESIVE COMPOSITIONS

| Composition: | A | B | C | D | 1 | 2 | 3 | 4 |
|---|---|---|---|---|---|---|---|---|
| A. Epoxides (pbw) | | | | | | | | |
| DER 331 | 48.5 | 37.9 | 49.6 | 37.9 | 42.4 | 45.5 | 45.6 | 38.5 |
| DER 736 | - | 8.0 | - | - | - | - | - | - |
| Kelpoxy 293-100 | - | 5.0 | - | - | - | - | - | - |
| WC-68 | 5.3 | - | 5.7 | - | 4.9 | 5.3 | 5.3 | 5.3 |
| Z-6040 | 0.4 | 0.4 | 0.4 | 0.4 | 0.3 | 0.4 | 0.4 | 0.4 |
| B. Curing Agents (pbw) | | | | | | | | |
| Dicyandiamide | 2.3 | 2.3 | 2.5 | 2.1 | 2.1 | 2.4 | 2.4 | 2.3 |
| CA 150 | - | 0.4 | 0.8 | 2.1 | 0.7 | 0.7 | - | - |
| CA 152 | - | - | - | - | - | - | 0.7 | - |
| Ciba-Geigy HY940 | 20.0 | - | - | 4.2 | 10.0 | 11.0 | 11.0 | 20.0 |
| Formvar 15/95E | - | 20.0 | 20.5 | - | 17.5 | 10.0 | 10.0 | 10.0 |
| Acryloid K120N | - | - | - | 2.0 | - | - | - | - |
| C. Other Additives (pbw) | | | | | | | | |
| Talc | 20.4 | - | 20.5 | 48.4 | 17.5 | 21.2 | 21.1 | 20.5 |
| Calcium Carbonate | - | 26.0 | - | - | - | - | - | - |
| Cab-o-sil N707SD | 2.0 | - | - | - | - | 2.0 | 2.0 | 2.0 |
| 5 mil glass beads | 1.0 | 1.0 | - | 2.9 | 5.0 | 1.5 | 1.5 | 1.5 |
| | 99.9 | 101.0 | 100 | 100 | 99.7 | 100 | 100 | 100 |
| Properties: | | | | | | | | |
| Stability @ 105°F | >3 wks | <1 wk | <1 wk | <1 wk | <1 wk | <1 wk | <2 wks | >3 wks |
| Induction cure | 4s @ 360°F | 6s @ 320°F | 6s @ 280°F | 6s @ 325°F | 6s @ 310°F | 6s @ 380°F | estimated | 4s @ 358°F |
| Green Strength, psi | 30 lbs. | 30 | 85 300 | 460 | 375 | 20 | 20 | 375 lbs. |
| Full Cure Strength, psi | 2100 | 1600 foaming | 2000 foaming | 1900 | 2100 | 1700 20 mil bondline | 2300 | 2100 |

Table 1 shows the results of some formulations testing which had target criteria of providing an induction curable adhesive composition which is stable for at least two weeks at 105°F; is induction curable to a green strength of at least 200 psi in 6 seconds or less when induction heated to 185°C or less and which provides good final cure adhesive properties to oily galvanized metal substrates on the order of about 2000 psi.

Example A shows a composition containing a curing agent comprising DICY and HY940. Although stability and full cure criteria were met, the induction cured green strength of Example A was well below the 2000 psi criteria.

Examples B and C show a combination of a thermoplastic polyvinyl formal powder and DICY with a curing accelerator. The samples foamed considerably and failed to satisfy all three criteria. Examples B and C indicated that at 20% use levels foaming under humid summer conditions would be a major problem and also that use of a thermoplastic alone would not satisfy green strength criteria.

Example D shows that a combination of DICY, HY940 and a thermoplastic powder provide good green strength results but stability was very poor.

Example 1 demonstrates that good results are achieved by combining polyvinyl formal powder and HY940 together with DICY. Stability is still too poor and foaming at higher levels of thermoplastic may be a problem. Examples 2 and 3 show the results obtained using lower levels of polyvinyl formal. Stability for compositions containing an accelerator for the DICY were all generally poor. Green strength was undesirably low.

Example 4 shows preferred embodiment of this invention wherein the concentration of HY940 was increased while the lower level of thermoplastic was retained. Cure accelerator for DICY was deleted. The results show that the composition of Example 4 was the best formulation tested. All three criteria were met.

The data of Table 1 demonstrate that an effective curing agent for an induction cured epoxy adhesive requires a combination of DICY, HY940 and a suitable green strength enhancing thermoplastic powder, in this case, a polyvinyl formal powder.

## EXAMPLE 5

Following the lessons learned in Example 4, another adhesive composition comprising a combined curing agent comprising DICY, HY940 and polyvinyl formal was prepared and more thoroughly investigated for stability, green strength and final cure properties.

The composition prepared is set forth in Table 2.

## TABLE 2: INDUCTION CURABLE ADHESIVE COMPOSITION

| EXAMPLE | 5 |
|---|---|
| Composition, pbw | |
| A. Epoxides: | |
| DER 331 | 38.5 |
| WC-68 | 5.3 |
| Z-6040 | 0.4 |
| B. Curing Agent: | |
| DICY | 2.3 |
| HY940 | 20.0 |
| FORMVAR 15/95E | 10.0 |
| C. Other Additives: | |
| Talc | 21.4 |
| Cab-o-sil N70TSD | 2.0 |
| $TiO_2$ | .08 |
| CALCO BLUE ZV BASE | .02 |
| | 100 parts |

Physical Properties:

| | | |
|---|---|---|
| Color | - | Green |
| Press Flow Viscosity, seconds (80 psi, 0.104 inch orifice, 20 gms) | | |
| Initial | - | 17-20 |
| 3 weeks at 105°F | - | 19-22 |
| 6 weeks at 105°F | - | 46-50 |
| 4 weeks at 95°F | - | 18-22 |
| Density, lbs/gal | - | 11.0 |

Test coupons were prepared, induction cured and tested in accordance with the methods of Examples 1-4 using the composition of Example 5. The induction cured coupons were also subjected to special conditioning tests to determine environmental green strength properties. Where indicated, some of the induction cured test coupons were subjected to Environmental Exposure, which consisted of consecutively storing induction heat cured coupons 1 week at -20°F; 1 week at 100°F and 100% relative humidty and 1 week at 105°F. This was done to simulate possible part shipping and storage conditions prior to final curing. Some of the test coupons were subjected to thermal cycling tests wherein induction cured coupons were subjected to repeated thermal cycles wherein one thermal cycle consisted of conditioning 4 hours at

190°F, followed by 4 hours at 100°F and 100% relative humidity followed by 16 hours at -20°F. Some of the test coupons were subjected to salt spray resistance tests in accordance with ASTM D-117 wherein the test coupon was suspended in a saturated 5% salt water atmosphere for the times and temperatures indicated.

Some samples were subjected to scab corosion testing in accordance with Fisher Body Test Method, FBTM 54-26. In accordance with this testing procedure on a Monday, cured samples are conditioned by oven heating for 1 hour at 60°C followed by 30 minutes in a -10°C cold cabinet followed by 15 minutes of immersion in a 5% salt solution followed by conditioning for 21 hours of humidity exposure at 140°F and 85% relative humidity. From Tuesday through Friday, the samples are re-immersed in salt solution, drained and returned to humidity conditioning. On Saturday and Sunday the samples remain under humidity conditioning. This weekly cycle is repeated for a period of four weeks before testing.

Some cured samples were also tested for tortional shear strength in accordance with the Pendulum-Shear Impact test, Fisher Body Test Method, FBTM 45-76. In accordance with this method a mounted sample is impacted broadside at 90° angle with a weighted pendulum. The number of ft-lbs of energy absorbed by the sample in producing failure is noted as is the percentage and type of failure, e.g. cohesive or adhesive.

Results of the green strength stress conditioning studies are set forth in Table 3, as follows:

TABLE 3: Environmental Green Strength Properties

| Example | <u>5</u> |
|---|---|
| LAP SHEAR Results, psi, % and type of failure | |
| CONDITIONING: | |
| 1. Initial Green Strength | 370 psi |
| 2. Green Strength after Environmental Exposure | 720 psi |
| 3. Postcured 25 minutes at 340°F | 1340 psi, 100% Cohesive |
| 4. Postcured 25 minutes at 340°F After Environmental Exposure | 1310 psi, 100% Cohesive |
| 5. 500 Hours Salt Spray at 95°F After Post cure 25 minutes at 340°F After Environmental Exposure | 1325 psi, 100% Cohesive |
| 6. 10 Thermal Cycles, After Postcure of 25 minutes at 340°F. After Environmental Exposure | 1260 psi, 100% Cohesive |
| 7. 500 Hours Salt Spray at 95°F, After Postcure 25 minutes at 340°F | 1300 psi, 100% Cohesive |
| 8. 10 Thermal Cycles, After Postcure 25 minutes at 340°F | 1250 psi, 100% Cohesive |
| 9. 1000 Hours Salt Spray at 95°F, after post cure 25 minutes at 340°F | 1200 psi, 100% Cohesive |
| 10. 1000 Hours Salt Spray at 95°F, after post cure 25 minutes at 340°F After Environmental Exposure | 1200 psi, 100% Cohesive |

Test coupons prepared with the adhesive composition of Example 5 were also simply oven cured for 30 minutes at 400°F and subjected to conditioning to determine full-cure physical and environmental properties the results are reported in Table 4, below:

TABLE 4: OVEN CURED PROPERTIES OF EXAMPLE 5

Test Results - Oven Cured Only

Cold Rolled Steel (DQSAK/DQSAK)
.03 inch thick, mill oil coated, .5 inch over lap, .005 inch bond line thickness, cured 30 minutes at 400°F.

| | |
|---|---|
| Tensile Lap Shear Pull strength, psi | |
| Initial | 2080 psi, 100% Cohesive |
| 250 Hours Salt Spray at 95°F | 2030 psi, 100% Cohesive |
| 2 Weeks at 100°F and 100% RH | 2130 psi, 100% Cohesive |
| 4 Weeks Scab Corrosion (Painted Coupons) | 1600 psi, 80% Cohesive |
| Torosional Impact | 44 in. lb., 100% Cohesive |

Galvanized, G90, .035 inch thick, mill oil coated, .5 inch overlap, .005 inch bond line thickness, cured 30 minutes at 400°F.

| | |
|---|---|
| Tensile Lap Shear Pull strength, psi | |
| Initial | 2900 psi, 100% Cohesive |
| 2 Weeks 100°F and 100% R.H. 100% R.H. | 2400 psi, 100% Cohesive |
| 250 Hours Salt Spray at 95°F | 2500 psi, 100% Cohesive |
| 3 Weeks 100°F and 100% R.H. | 2450 psi, 90% Cohesive |
| (Cured 20 minutes at 350°F plus 30 minutes at 250°F) | |

The data of Tables 3 and 4 indicate that the composition of Example 5 provides an excellent induction curable adhesive for oily galvanized metal parts especially adapted for use in modern automobile manufacturing methods.

EXAMPLE 6

In the following Examples, a number of different theromplastic powders were evaluated for suitability as green strength enhancing agents in the combined induction curing agent of this invention.

The thermoplastic powders were preliminarily evaluated for stability in epoxy resins and for gel behavior in epoxies to pre-screen suitable candidates prior to working up to a complete formulation. The thermoplastic powders were tested by first hand mixing a 70/30 blend of DER 331/thermoplastic powder. Portions of the blends were placed in sealed containers and stored in a 105°F oven for a period of three weeks. The

stability samples were regularly checked throughout the period until a marked increase in viscosity of the blend was noted. In addition, portions of the blend were baked at 300°F for 10 minutes and were visually observed to determine whether the thermoplastic showed some gel effect, either by melting or melting and fusing within the epoxy resin. For purposes of this inspection some physical change in the thermoplastic powder was required.

Test samples of the 70/30 blends which exhibited a gel effect in epoxy and were stable for a two week period at 105°F were considered candidates for further formulation studies.

The thermoplastic powders evaluated and the results obtained are set forth in Table 5 as follows:

TABLE 5: 70/30 Blends of DER 331/Thermoplastic

| Thermoplastic Name<br>Chemical Name | Gels in Epoxy<br>Yes/No | Stability |
|---|---|---|
| Polyvinyl Alcohol - DuPont | No | Yes |
| Acryloid K120N - Rohm & Haas<br>Acrylic Polymer of Methyl Methacrylate | Yes | No |
| Acryloid A-30 Rohm & Haas<br>Acryloid A-11 | Yes | No |
| Methyl Methacrylate Polymers | Yes | Yes (Poor) |
| Blendex 311 Borg Warner | No | Yes |
| Blendex 386 | No | Yes |
| Blendex 131 | Yes | No |
| Blendex 586 | Yes | Yes (Poor) |
| Hostyren 57 - American Polystyrene Hoecht | Yes | Yes |
| Phenoxy PKHH - Union Carbide<br>Polyhydroxyether | Yes (Excellent) | No |
| Polyox WSR-1105<br>Ethylene Oxide - Union Carbide | Yes<br>Effect is too weak | Yes |
| Nylon 12 - Huels<br>Polyamide polymer | Yes | Yes |
| Vestamelt X4053A - Huels<br>Hot Melt Polyester | Yes | Yes |
| Elvacite - DuPont | | |
| 2013 | Yes | No |
| 2021 | Yes | Yes (Workable Formula) |
| 2045 | Yes | No |
| FPC-9275 Occidental<br>polyvinyl chloride polymer | No | Yes |
| FN 510 USI<br>Polyethylene Powder | Yes | Yes |
| FE 532 USI<br>Ethylene Vinyl Acetate | Yes | Yes |
| Formvar 15/95E Monsanto<br>Polyvinyl Formal | Yes | Yes |

TABLE 5 (cont'd.)

| Thermoplastic Name<br>Chemical Name | Gels in Epoxy<br>Yes/No | Stability |
|---|---|---|
| Butvar - Monsanto<br>Polyvinyl Butyral | Yes | Yes |
| Chemigum P83 Goodyear<br>Nitrile Rubber | Yes | No |
| Dylark 232 - ARCO<br>Styrene/Maleic Anhydride | Yes | No |
| BaylithT Mobay | No | Yes |

From the foregoing screen testing it was determined that the following thermoplastic powders provided satisfactory properties for induction heat curing:

| | |
|---|---|
| Formvar 15/95E | Polyvinyl Formal |
| FN 510 | Low density polyethylene |
| Vestamelt X4053A | Polyester |
| Elvacite 2021 | Acrylic Resin, Methyl methacrylate |
| Butvar | Polyvinyl butyral |
| Hostyren 57 | Polystyrene |
| FE 532 | Ethylene vinyl acetate |
| Nylon-12 | Polyamide |

EXAMPLES 7-11

Several of the thermoplastic powders evaluated in Example, 6 some of which passed the pre-screen testing and some of which did not, were formulated with or without curing agents into adhesive compositions, which were tested for stability at 105°F in accordance with the methods of Examples 1-5. Lap shear coupons were prepared, some of them for induction curing on Robotron equipment as in Examples 1-5 above, for other coupons a simulated intermediate cure was achieved by oven heating the lap shear coupons at 275°-300°F for 5 to 10 minutes, to provide a green strength value without activating the high temperature cure reaction of the DICY component. The samples were fully cured by heating lap shear coupons at 375°F for 60 minutes.

The compositions prepared and the results obtained are set forth in Table 6 as follows:

TABLE 6: Adhesive Compositions

| EXAMPLE | 6 | 7 | 8 | E | 9 | F |
|---|---|---|---|---|---|---|
| COMPOSITION | | | | | | |
| A. EPOXIDES | | | | | | |
| DER 331 | 32.32 | 32.32 | 32.32 | 32.32 | 32.32 | 32.32 |
| WC-68 | 5.0 | 5.0 | 5.0 | 5.0 | 5.0 | 5.0 |
| Z-6040 | 0.4 | 0.4 | 0.4 | 0.4 | 0.4 | 0.4 |
| B. OTHER ADDITIVES | | | | | | |
| TALC | 16.0 | 16.0 | 16.0 | 16.0 | 16.0 | 16.0 |
| CAB-O-SIL | 2.0 | 2.0 | 2.0 | 2.0 | 2.0 | 2.0 |
| DYES | 0.08 | - | 0.08 | 0.08 | 0.08 | 0.08 |
| 5 mil. GLASS BEADS | - | - | - | - | - | - |
| ALUMINUM M0201 | 6.0 | 6.0 | 6.0 | 6.0 | 6.0 | 6.0 |
| C. CURING AGENT | | | | | | |
| DICY | 2.2 | 2.2 | 2.2 | 2.0 | 2.0 | 2.0 |
| HY940 | 25.0 | 25.0 | 25.0 | 25.0 | 25.0 | 25.0 |
| FN 510 | 11.0 | - | - | - | - | - |
| FN 532 | - | 11.0 | - | - | - | - |
| X4053AP1 | - | - | 11.0 | - | - | - |
| ELVACITE® 2013 | - | - | - | 11.0 | - | - |
| ELVACITE® 2021 | - | - | - | - | 11.0 | - |
| ELVACITE® 2041 | - | - | - | - | - | 11.0 |
| NYLON-12 | - | - | - | - | - | - |
| FORMVAR 15/95E | - | - | - | - | - | - |
| HOSTYREN 57 | - | - | - | - | - | - |
| BUTVAR B72 | - | - | - | - | - | - |
| ACRYLOID A-30 | - | - | - | - | - | - |
| PROPERTIES: | | | | | | |
| Stability at 105°F, weeks | >3 | >2 | >2 | <1 | >2 | <1 |
| Green Strength, psi (Robotron, cure conditions) | 325 (350°/4s.) | 325 (350°/4s.) | 325 (350°/4s.) | - | 300 (350°/4s.) | - |
| Full cure Pull Shear Strength, psi | 2000 | 1600 | 1500 | 2000 | 1700 | 1700 |

TABLE 6 (cont'd.): Adhesive Compositions

| EXAMPLE | G | H | I | J | K |
|---|---|---|---|---|---|
| COMPOSITION | | | | | |
| A. EPOXIDES | | | | | |
| DER 331 | 45.5 | 45.5 | 45.4 | 52.5 | 52.5 |
| WC-68 | 5.3 | 5.3 | 5.3 | 5.3 | 5.3 |
| Z-6040 | 0.4 | 0.4 | 0.4 | 0.4 | 0.4 |
| B. OTHER ADDITIVES | | | | | |
| TALC | 20.4 | 20.4 | 20.4 | 20.4 | 20.4 |
| CAB-O-SIL | 3.0 | 3.0 | 2.0 | 2.0 | 2.0 |
| DYES | - | - | - | - | - |
| 5 mil. GLASS BEADS | 1.0 | 1.0 | - | - | - |
| ALUMINUM M0201 | - | - | - | - | - |
| C. CURING AGENT | | | | | |
| DICY | - | 2.4 | 2.4 | 2.4 | 2.4 |
| HY940 | - | - | 6.1 | - | - |
| FN 510 | - | - | - | - | - |
| FN 532 | - | - | - | - | - |
| X4053AP1 | - | - | - | - | |
| ELVACITE® 2013 | - | - | - | - | |
| ELVACITE® 2021 | - | - | - | - | - |
| ELVACITE® 2041 | - | - | - | - | - |
| NYLON-12 | 22.0 | 22.0 | - | - | - |
| FORMVAR 15/95E | - | - | 10.0 | 10.0 | 10.0 |
| HOSTYREN 57 | - | - | 6.0 | - | |
| BUTVAR B72 | - | - | - | 6.0 | |
| ACRYLOID A-30 | - | - | - | - | 6.0 |
| PROPERTIES: | | | | | |
| Stability at 105°F, weeks | >3 | >3 | >3 | >3 | <1 |
| Green Strength, psi (Robotron, cure conditions) | 66 | - | 50 | 65 | 36 |
| Full cure Pull Shear Strength, psi | - | 1800 | 2100 | 2000 | 2000 |

The results of Table 6 verify the accuracy of the pre-screening methods employed in Example 6. The compositions of Examples 6-8 all substantially met the stability green strength and final cure criteria. The compositions of Examples E, 9, and F show that of the polyacrylic resins tested only the Elvacite 2021 provided acceptable results. Examples G and H were formulated without HY940. Example G demonstrates that the NYLON 12 does contribute to green strength and does not adversely effect final cure properties, as shown in the DICY containing formulation of Example H. Similarly, the compositions of Examples I and J show that a combination of FORMVAR® and HOSTYREN® and FORMVAR® and BUTVAR® resins contributed to green strength enhancement, respectively, even though the compositions did not contain a sufficient amount of HY940. In contrast, the composition of Example K, containing ACRYLOID A-30® resin did not enhance green strength and had poor stability.

EXAMPLES 10-11

In the following Examples, test panels were prepared and tested in accordance with Examples 1-4, with the exception that, instead of employing HY940 as the intermediate temperature curing agent, a modified polyamine, ANCAMINE 2014A® from Anchor Chemical Corporation was used. The compositions prepared and the results obtained are set forth in Table 7 as follows:

TABLE 7: Induction Curable Adhesives Comprising ANCAMINE 2014A®

| EXAMPLE | 10 | 11 |
|---|---|---|
| Composition, pbw | | |
| A. Epoxides: | | |
| DER 331 | 47.5 | 47.5 |
| WC-68 | 8.0 | 8.0 |
| B. Curing Agent: | | |
| DICY | 2.0 | 2.0 |
| FORMVAR 15/95E | 4.0 | 4.0 |
| FN 510 | 3.4 | 3.4 |
| CIBA HT939 | 12.7 | - |
| ANCAMINE 2041 | - | 12.8 |
| C. Other Additives: | | |
| Talc | 19.9 | 19.9 |
| Cab-o-sil N70TSD | 3.0 | 3.0 |
| Dyes | 0.08 | 0.08 |
| PROPERTIES | | |
| Stability at 105°F, weeks | > 2 | > 2 |
| Green Strength, lbs. | 350 | 450 |
| Final Cure strength, psi | 2200 | 2100 |

As shown by the data of Table 7, the composition of Example 11 containing ANCAMINE 2041A® provided a satisfactory induction curable adhesive for bonding oily galvanized metallic parts having properties as good as the same formulation prepared with HY939, the active ingredient in HY940.

Although the present invention has been described with reference to certain preferred embodiments, modification or changes may be made therein by those skilled in this art. For example, a different mixture of polyepoxides may be used as the epoxy component. For end use applications where the adhesive is used to bond non-oily metals, some or all of the mineral filler adhesion promoters may be omitted. All such obvious modifications may be made without departing from the scope and spirit of the present invention as defined by the appended Claims.

## Claims

1. A curing agent additive for induction curing of epoxy-based adhesive compositions; said curing agent comprising:

(i) a latent high temperature curing agent;

(ii) a latent intermediate temperature curing agent; and

(iii) a green strength enhancing agent comprising a finely-divided thermoplastic resin powder selected from the group consisting of low density polyethylene, ethylene vinyl acetate, polystyrene, polyvinyl formal, polyvinyl butyral, poly(methyl methacrylate), NYLON-12 and hot melt polyester resins and mixtures of any of the foregoing resins.

2. A curing agent additive as recited in Claim 1 wherein component (i) comprises from about 7 to about 12% by weight, component (ii) comprises from about 35 to about 65% by weight; and component (iii) comprises about 26 to about 53% by weight, based upon the total weight of said curing agent additive.

3. A curing agent additive as recited in Claim 1 wherein said high temperature curing agent comprises dicyandiamide.

4. A curing agent additive as recited in Claim 1, wherein said intermediate temperature curing agent is selected from the group consisting of Dibenzo (i,t)(1,4,7,12,15,18)hexaazacyclodocosine-5,13,18,26(6H,19H)-tetrone(9Cl), SB-7,8,9,10,11, 12,20,21,22,23,24,25-decahydro and ANCAMINE® 2041A.

5. An induction curable adhesive composition comprising:

(a) a polyepoxide or mixture of polyepoxides; and

(b) an effective amount of a combination curing agent therefor comprising:

(i) a latent high temperature curing agent;

(ii) a latent intermediate temperature curing agent, and

(iii) a green strength enhancing agent comprising a finely divided thermoplastic resin powder selected from the group consisting of low density polyethylene, ethylene vinyl acetate, polystyrene, polyvinyl formal, polyvinyl butyral, poly(methyl methacrylate), NYLON-12 hot melt polyester resins and mixtures of any of the foregoing resins.

6. An induction curable adhesive composition comprising:

(a) 100 parts by weight of a polyepoxide or a mixture of epoxides having an epoxy equivalent weight of at least about 150; and

(b) from about 30 to about 50 parts by weight of a combination curing agent comprising:

(i) from about 2 to about 8 phr of a latent high temperature curing agent;

(ii) from about 12 to about 30 phr of a latent intermediate temperature curing agent; and

(iii) from about 12 to about 28 phr of a green strength enhancing agent comprising a finely divided thermoplastic resin powder selected from the group consisting of low density polyethylene, ethylenevinyl acetate, polystyrene, polyvinyl formal, polyvinyl butyral, poly(methyl methacrylate), NYLON-12 and hot melt polyester resins and mixtures of any of the foregoing resins, based upon the total weight of said adhesive composition.

7. An induction curable adhesive composition as recited in Claim 6, wherein component (a) comprises a diglycidyl ether of bisphenol -A and wherein component (b)(i) comprises dicyandiamide.

8. An induction curable adhesive composition as recited in Claim 6, wherein component (b)(ii) is selected from the group consisting of Dibenzo(i,t)(1,4,7,12,15,18)hexaazacyclodocosine-5,13,18,26(6H,19H)-tetrone (9Cl), SB-7,8,9,10,11,12,20,21,22,23,24,25-decahydro and ANCAMINE® 2041A.

9. An induction curable adhesive composition for bonding oily metallic substrates, said composition comprising:

(a) 100 parts by weight of a polyepoxide or a mixture of epoxides having an epoxy equivalent weight of at least about 150;

(b) from about 30 to about 50 parts by weight of a combination curing agent comprising:

(i) from about 2 to about 8 phr of a latent high temperature curing agent;

(ii) from about 12 to about 30 phr of a latent intermediate temperature curing agent; and

(iii) from about 12 to about 28 phr of a green strength enhancing agent comprising a finely divided thermoplastic resin powder selected from the group consisting of low density polyethylene, ethylene vinyl acetate, polystyrene, polyvinyl formal, polyvinyl butyral, poly(methyl methacrylate), NYLON-12 and hot melt polyester resins and mixtures of any of the foregoing resins; and

(c) from about 27 to about 100 parts by weight of a metal adhesion promoter comprising a finely divided mineral filler selected from the group consisting of talc, calcium carbonate, fumed silica and mixtures of any of the foregoing mineral filters.

10. A method for fixturing oily metallic parts to provide handling strength for storage and shipment, said method comprising:

(a) providing a plurality of oily metallic parts;

(b) disposing intermediate at least two adjacent surfaces of said parts an effective amount of an adhesive compositions as recited in Claim 10 to form an adhesive joint therebetween; and

(c) thereafter, inductively heating said adhesive joint for a time sufficient to provide a metal temperature of between about 150°C and 185°C to provide a green strength in said adhesive joint of at least about 200 psi.

European Patent Office

# EUROPEAN SEARCH REPORT

Application Number

EP 87 10 6432

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | US-A-4 459 398 (T.J. DEARLOVE et al.)<br>* Claims; columns 5,6 *<br>--- | 1-10 | C 08 L 63/00<br>C 08 G 59/40<br>C 08 J 3/24<br>C 09 J 3/16 |
| Y | EP-A-0 197 892 (CIBA-GEIGY)<br>* Claims; page 2, paragraph 2 *<br>--- | 1-10 | |
| A | EP-A-0 029 008 (CIBA-GEIGY)<br>* Claims *<br>--- | 1 | |
| A | EP-A-0 101 964 (HENKEL)<br>* Claims *<br>--- | 1 | |
| A | FR-A-1 233 838 (DEGUSSA)<br>* Abstract; examples *<br>----- | 1 | |
| | | | TECHNICAL FIELDS SEARCHED (Int. Cl.4) |
| | | | C 08 J<br>C 08 G<br>C 09 J |

The present search report has been drawn up for all claims

| Place of search | Date of completion of the search | Examiner |
|---|---|---|
| THE HAGUE | 12-01-1988 | DERAEDT G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)